Europäisches Patentamt

European Patent Office

Office européen des brevets

(19)

(11) Numéro de publication: **0 207 821**
**B1**

(12) **FASCICULE DE BREVET EUROPEEN**

(45) Date de publication du fascicule du brevet:
23.08.89

(51) Int. Cl.⁴: **F16F 9/36**, F16J 15/16

(21) Numéro de dépôt: 86401087.1

(22) Date de dépôt: **22.05.86**

(54) Ressort à gaz à graissage permanent.

(30) Priorité: **22.05.85 FR 8507705**

(43) Date de publication de la demande:
**07.01.87 Bulletin 87/2**

(45) Mention de la délivrance du brevet:
**23.08.89 Bulletin 89/34**

(84) Etats contractants désignés:
**AT DE FR GB IT**

(56) Documents cités:
**EP-A- 0 011 139**
**DE-A- 2 642 932**
**FR-A- 1 073 901**
**FR-A- 1 095 378**
**GB-A- 533 526**
**GB-A- 670 128**
**GB-A- 696 569**
**US-A- 2 518 097**
**US-A- 4 484 753**

(73) Titulaire: **Société d'Exploitation des Etablissements ORFLAM : Société Anonyme dite, Z.I. Route de Trois Fontaines, F-52103 Saint-Dizier Cédex(FR)**

(72) Inventeur: **Gaillard, Jean-Claude, 1, Square du Retiro, F-78150 Le Chesnay(FR)**

(74) Mandataire: **Nony, Michel, Cabinet DUPUY & LOYER 14, rue La Fayette, F-75009 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention se rapporte aux dispositifs connus sous le nom de ressorts à gaz.

On sait que ces dispositifs contiennent, enfermé dans une sorte de vérin, un gaz (en particulier un gaz inerte comme de l'azote) sous haute pression (souvent au moins une centaine de bars). Chaque dispositif constitue une unité indépendante qui, théoriquement sans fuite, ne nécessite aucun raccordement à un circuit externe d'alimentation en pression. Ces dispositifs offrent l'avantage de produire un amortissement souple et silencieux. L'effet de ressort est obtenu successivement par la compression et la détente du gaz enfermé, agissant sur une tige-piston pénétrant dans une chambre prégonflée.

Les appareils connus sont constitués par une enveloppe cylindrique dont l'une des extrémités est fermée par un fond étanche pourvu d'une valve de mise en pression du gaz, d'une tige coulissant dans un manchon, et d'un segment racleur dont la principale fonction est d'empêcher l'entrée d'impuretés lors du mouvement de contraction du ressort.

L'étanchéité au gaz est assurée par une presse-étoupe comportant un joint en un matériau à faible coefficient de frottement, comme un mastic à base de polytétrafluoroéthylène, enfermé entre deux bagues de métal fritté lubrifiées lors du montage.

Il a été constaté que la longévité du joint, donc du ressort à gaz, est tributaire du graissage réalisé. Or, quelles que soient les précautions que l'on prenne, petit à petit du lubrifiant est entraîné par la sortie de la tige malgré la présence du segment racleur. L'assèchement détériore le joint dont de fines particules sont entraînées par la tige.

L'invention vise la réalisation d'un ressort à gaz dans lequel le joint du presse-étoupe est lubrifié par une réserve de lubrifiant qui se trouve infecté au fur et à mesure des besoins.

L'invention a ainsi pour objet un ressort à gaz comprenant un boîtier fermé d'une manière étanche et pourvu d'une valve d'injection de gaz, un manchon de guidage dans lequel coulisse une tige, un élément presse-étoupe comprimant, sous l'effet de la pression du gaz enfermé dans le boîtier, un joint d'étanchéité entre ledit manchon et ladite tige, caractérisé par le fait que ledit manchon comporte une jupe dans laquelle coulisse l'élément presse-étoupe, que le manchon et l'élément presse-étoupe présentent des épaulements définissant entre le manchon et l'élément presse-étoupe une première chambre contenant ledit joint d'étanchéité au contact de la tige et une seconde chambre remplie de lubrifiant, ladite seconde chambre étant en communication avec une chambre dudit manchon dans laquelle est logée une bague dans laquelle coulisse à jeu ladite tige.

Il a par ailleurs été constaté que des incidents pouvaient résulter en fonctionnement d'un mauvais contrôle de la course de la tige-piston pouvant à la limite provoquer une éjection accidentelle de la tige-piston sous l'effet de la pression. Pour éviter cela, il est prévu selon une caractéristique particulière de l'invention, que la tige est pourvue d'une collerette destinée à limiter le déplacement de sortie de ladite tige par contact avec l'extrémité de la jupe du manchon.

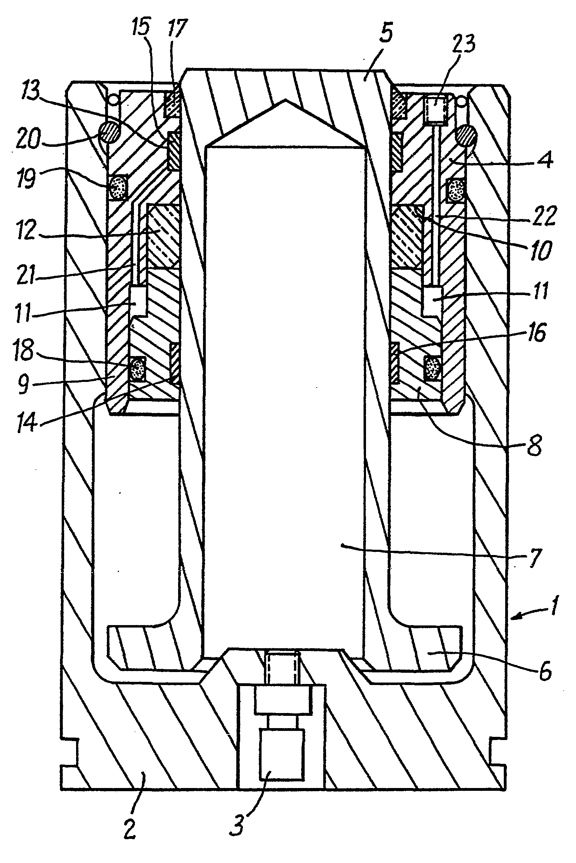

D'autres particularités et avantages apparaîtront à la lecture de la description et des revendications qui suivent, faites en regard du dessin représentant une coupe élévation d'un ressort à gaz selon l'invention.

Comme on le voit sur cette figure, ce ressort comporte un boîtier creux extérieur 1 dont le fond 2 est pourvu de la valve 3 de remplissage du gaz (azote) et de mise en pression.

A l'extrémité ouverte de ce boîtier 1 est placé un manchon de guidage 4 traversé par une tige-piston 5.

Avantageusement cette tige 5 est pourvue d'une collerette 6 et forée d'un trou borgne 7 destiné à augmenter considérablement la quantité de gaz enfermé.

Un élément inférieur presse-étoupe 8 coulisse à l'intérieur d'une jupe 9 du manchon 4, deux chambres 10 et 11 étant initialement laissées entre des épaulements en regard du manchon et de l'élément presse-étoupe mobile. La chambre 10 sert de logement à un joint 12 formé d'une masse en mastic classique en polytétrafluoroéthylène. La chambre 11 sert de réserve de lubrifiant.

Le manchon 4 l'élément presse-étoupe 8 comprtent des chambres annulaires 13 et respectivement 14 logeant des bagues 15 et 16 dans lesquelles coulisse librement la tige 5. Un segment racleur 17 empêche l'introduction d'impuretés.

Des joints d'étanchéité 18, 19, 20 sont prévus entre less divers composants en regard.

Selon l'invention, la chambre 11 est reliée à la chambre 13 par un canal 21 ; un canal 22 est prévu pour remplir de lubrifiant la chambre 11, ce canal 22 débouchant à l'extérieur du manchon 4 par un orifice 23 pourvu d'un bouchon.

Les dispositions précédemment décrites présentent sur celles des ressorts classiques, les avantages que tout d'abord le déplacement de la tige 5 se trouve limité par butée de sa collerette 6 contre l'extrémité de la jupe 9 du manchon et non sur l'élément inférieur du presse-étoupe.

Il est en outre aisé de comprendre que l'étanchéité absolue assurée par le joint 12 résulte de la pression constante exercée par l'action du gaz emprisonné et transmise par l'élément 8.

En enfonçant la tige 5, on obtient une résistance égale au produit de la section de la tige par la pression du gaz enfermé. En sortie de cette tige, cet effet est restitué par la détente de ce gaz. L'usure du joint 12 diminuant son volume, déplace d'amont en aval l'élément 8, diminuant le volume de la chambre 11, ce qui injecte un peu de lubrifiant dans le canal 21 et la chambre 13 enfermant la bague 15; du lubrifiant atteint alors la périphérie de la tige 5.

Ce graissage diminue l'usure pour un certain temps et ainsi de suite.

## Revendications

1. Ressort à gaz comprenant un boîtier (1) fermé d'une manière étanche et pourvu d'une valve d'injection de gaz (3), un manchon de guidage (4) dans lequel coulisse une tige (5), un élément presse-étoupe (8) comprimant, sous l'effet de la pression du gaz enfermé dans le boîtier, un joint d'étanchéité (12) entre ledit manchon et ladite tige, caractérisé par le fait que ledit manchon (4) comporte une jupe (9) dans laquelle coulisse l'élément presse-étoupe (8), que le manchon (4) et l'élément presse-étoupe (8) présentent des épaulements définissant entre le manchon et l'élément presse-étoupe une première chambre (10) contenant ledit joint d'étanchéité (12) au contact de la tige (5) et une seconde chambre (11) étant en communication avec une chambre (13) dudit manchon (4) dans laquelle est logée une bague (15) dans laquelle coulisse à jeu ladite tige (5).

2. Ressort à gaz selon la revendication 1, caractérisé par le fait que la chambre est reliée à l'extérieur par un canal de remplissage (22) dont l'orifice (23) peut être obturé par un bouchon.

3. Ressort à gaz selon l'une quelconque des revendications 1 et 2, caractérisé par le fait que l'élément presse-étoupe (8) comporte au moins une chambre (14) dans laquelle est logée une bague (16) dans laquelle coulisse librement ladite tige (5).

4. Ressort à gaz selon l'une quelconque des revendications précédentes, caractérisé par le fait que la tige (5) est pourvue d'une collerette (6) destinée à limiter le déplacement de sortie de ladite tige par contact avec l'extrémité de la jupe (9) du manchon.

5. Ressort à gaz selon l'une quelconque des revendications précédentes, caractérisé par le fait que la tige (5) est creuse.

**Patentansprüche**

1. Gasfeder mit einem dicht geschlossenen Gehäuse (1) mit einem Gas-Einlaßventil (3), einer Führungshülse (4), in der ein Kolben (5) verschiebbar geführt ist, einem Stopfbüchsenelement (8), das durch die Wirkung des Druckes des in dem Gehäuse eingeschlossenen Gases eine zwischen der Hülse und dem Kolben liegende Dichtung (12) komprimiert, dadurch gekennzeichnet, daß die Hülse (4) eine Schürze (9) aufweist, in der das Stopfbüchsenelement (8) verschiebbar geführt ist, daß die Hülse (4) und das Stopfbüchsenelement (8) Absätze aufweisen, die zwischen der Hülse und dem Stopfbüchsenelement eine erste Kammer (10), die die Dichtung (12) in Berührung mit dem Kolben (5) enthält, und eine zweite Kammer (11) bilden, die mit einem Schmiermittel gefüllt ist, wobei die zweite Kammer (11) mit einer Kammer (13) der Hülse (4) in Verbindung steht, in der ein Ring (15) angeordnet ist, in dem der Kolben (5) mit Spiel geführt ist.

2. Gasfeder nach Anspruch 1, dadurch gekennzeichnet, daß die Kammer (11) mit dem Außenraum durch einen Füllkanal (22) verbunden ist, dessen Öffnung (23) durch einen Stopfen verschließbar ist.

3. Gasfeder nach einem der Ansprüche 1 und 2, dadurch gekennzeichnet, daß das Stopfbüchsenelement (8) wenigstens eine Kammer (14) aufweist, in der ein Ring (16) angeordnet ist, in dem der Kolben (5) frei beweglich ist.

4. Gasfeder nach einem der vorstehenden Ansprüche, dadurch gekennzeichnet, daß der Kolben (5) mit einem Bund (6) versehen ist, der dazu dient, die Auswärtsbewegung des Kolbens zu begrenzen, indem er mit dem Ende der Schürze (9) der Hülse in Berührung tritt.

5. Gasfeder nach einem der vorstehenden Ansprüche, dadurch gekennzeichnet, daß der Kolben (5) hohl ist.

**Claims**

1. Gas spring comprising a housing (1) closed in a sealed manner and provided with a gas injection valve (3), a guiding sleeve (1) inside which a rod (5) slides, a stuffing-box element (8) compressing, owing to the effect of the pressure of the gas enclosed inside the housing, a seal (12) between the said sleeve and the said rod, characterized in that the said sleeve (4) comprises a skirt (9) inside which the stuffing-box element (8), slides in that the sleeve (4) and the stuffing-box element (8) have shoulders defining between the sleeve and the stuffing-box element a first chamber (10) containing the said seal (12) in contact with the rod (5) and a second chamber (11) filled with lubricant, the said second chamber (11) being in communication with a chamber (13) of the said sleeve (4) inside which there is accommodated a ring (15) inside which the said rod (5) slides with play.

2. Gas spring according to Claim 1, characterized in that the chamber (11) is connected to the outside via a filling channel (22), the orifice (23) of which may be closed by a stopper.

3. Gas spring according to either one of Claims 1 and 2, characterized in that the stuffing-box element (8) comprises at least one chamber (14) inside which there is accommodated a ring (16) inside which the said rod (5) freely slides.

4. Gas spring according to any one of the preceding claims, characterized in that the rod (5) is provided with a flange (6) intended to limit the outward displacement of the said rod through contact with the end of the skirt (9) of the sleeve.

5. Gas spring according to any one of the preceding claims, characterized in that the rod (5) is hollow.